(19) Europäisches Patentamt / European Patent Office / Office européen des brevets

(11) **EP 2 123 998 B1**

(12) **EUROPÄISCHE PATENTSCHRIFT**

(45) Veröffentlichungstag und Bekanntmachung des Hinweises auf die Patenterteilung:
**25.07.2018  Patentblatt 2018/30**

(51) Int Cl.:
*F25B 13/00* (2006.01)   *F25B 39/00* (2006.01)
*F25B 30/02* (2006.01)   *F28F 1/32* (2006.01)
*F28F 1/40* (2006.01)

(21) Anmeldenummer: **09006739.8**

(22) Anmeldetag: **19.05.2009**

(54) **Wärmepumpenvorrichtung mit einem Lamellenrohrwärmeübertrager als Verdampfer**

Heat pump device with a lamella tube heat exchanger as evaporator

Dispositif de pompe à chaleur doté d'un caloporteur doté d'une tubulure à lamelles en tant qu'évaporateur

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **21.05.2008  DE 102008024562**

(43) Veröffentlichungstag der Anmeldung:
**25.11.2009  Patentblatt 2009/48**

(73) Patentinhaber: **Stiebel Eltron GmbH & Co. KG
37603 Holzminden (DE)**

(72) Erfinder: **Smollich, Steffen
37603 Holzminden (DE)**

(56) Entgegenhaltungen:
**EP-A1- 0 936 432      EP-A1- 1 223 389
EP-A1- 1 243 876      WO-A1-03/073023
WO-A1-2008/007694    WO-A2-2006/066953
FR-A1- 2 901 015**

**Beschreibung**

Wärmepumpenvorrichtung mit einem Lamellenrohrwärmeübertrager als Verdampfer Die Erfindung betrifft eine Wärmepumpenvorrichtung mit einem Lamellenrohrwärmeübertrager als Verdampfer, einem Verdichter, einem Verflüssiger und einem Expansionsventil, mit einem reversiblen Kältemittelkreislauf.

Die Bereitstellung der Heizwärme bei Wärmepumpen erfolgt durch die Kondensation von Kältemittel unter hohem Druck und damit bei hoher Temperatur, während die Wärme an ein Wärmeträgermedium, beispielsweise Heizungswasser, abgegeben wird. Das verflüssigte Kältemittel wird anschließend in einem Drosselorgan, zum Beispiel einem Expansionsventil, entspannt und verdampft daraufhin unter Aufnahme von Umgebungswärme im Verdampfer der Wärmepumpe. Der Kältemitteldampf wird vom Verdichter der Wärmepumpe komprimiert, so dass er anschließend wieder im Verflüssiger der Wärmepumpe verflüssigt werden kann. Die Heizungswärmepumpe bietet den Vorteil, dass mittels der Kreisumkehr bei einem entsprechend ausgelegten Heizsystem auch gekühlt werden kann.

Im Betrieb einer Wärmepumpe befindet sich im Verflüssiger verhältnismäßig mehr Kältemittel als im Verdampfer. Bei Luft/Wasser-Wärmepumpen ist der Verdampfer üblicherweise ein Lamellenrohrwärmeübertrager (Aluminiumlamellen mit senkrecht dazu angeordneten Kupferrohren). Dieser hat im Verhältnis zu dem Verflüssiger ein größeres Volumen. Wird nun mit der Wärmepumpe gekühlt, ist der eigentliche Verdampfer mit dem größeren Volumen der Verflüssiger, in dem sich verhältnismäßig mehr Kältemittel befindet. Daraus resultiert, dass für den Heiz- und für den Kühlbetrieb unterschiedlich viel Kältemittel benötigt wird, und dies um so mehr, je unterschiedlicher die Volumina des Verflüssigers und des Verdampfers sind. WO 03/073023 A1 offenbart eine Wärmepumpenvorrichtung nach dem Oberbegriff des Anspruchs 1.

Aufgabe der Erfindung ist es daher, das innere Volumen des Lamellenrohrwärmeübertragers einer Luft/Wasser-Wärmepumpe zu minimieren, ohne dass seine Leistungsfähigkeit reduziert wird.

Gelöst ist die Aufgabe durch die Merkmale des Anspruchs 1. Vorteilhafte Ausführungsformen der Erfindung sind in den Unteransprüchen gegeben.

Damit ist erreicht, dass das Kältemittelfüllgewicht reduziert ist, und im Heizbetrieb wird somit weniger Kältemittel gepuffert.

Um die Leistungsfähigkeit eines Lamellenrohrwärmeübertragers beizubehalten, ist ein Kupferrohr auf der Innenseite mit Rippen versehen, so dass eine geringere Fläche eines glatten Rohres durch einen größeren Wärmeübergangskoeffizienten kompensiert wird. Der luftseitige Widerstand wird durch die dünneren Rohre verkleinert und die Fläche für den Wärmeübergang wird vergrößert, wodurch die Leistungsfähigkeit des Lamellenrohrwärmeübertragers verbessert wird.

Weitere Vorteile dieser Erfindung sind, dass für das Erreichen einer bestimmten Druckfestigkeit die Rohrwandstärke reduziert werden kann, d.h. neben der Materialeinsparung durch das im Durchmesser kleinere Rohr kann weiteres Material durch die dünnere Wandstärke eingespart werden.

Der Lamellenrohrwärmeübertrager wird vorzugsweise von außen mit Luft und von innen durch die Rohre mit Kältemittel durchströmt.

Vorteilhaft sind als Kältemittel R407C, R410A, R134a, R290 oder R744 verwendet.

Die Rohre des Lamellenrohrwärmeübertragers bestehen in vorteilhafter Weise aus Edelstahl oder Kupfer, sind mit Lamellen aus Aluminium bestückt und sind zumindest teilweise zueinander versetzt angeordnet. Vorteilhaft ist die Ausgestaltung der Rohre des Lamellenrohrwärmeübertragers innen mit Rippen.

Gemäß einem Ausführungsbeispiel befindet sich im Kältemittelkreislauf der Wärmepumpenvorrichtung eine Kältemittelfüllmenge von weniger als 6,0 kg, und die Wärmepumpenvorrichtung erzeugt bei einer Lufttemperatur von -7°C und einer Verflüssigeraustrittstemperatur von 50°C eine Heizleistung zwischen 10 und 14 kW.

Figur 1 zeigt einen Abschnitt eines Verdampfers,
Figur 2 zeigt ein Rohr mit Rippen,
Figur 3 zeigt eine Rohrwand mit Rippen.

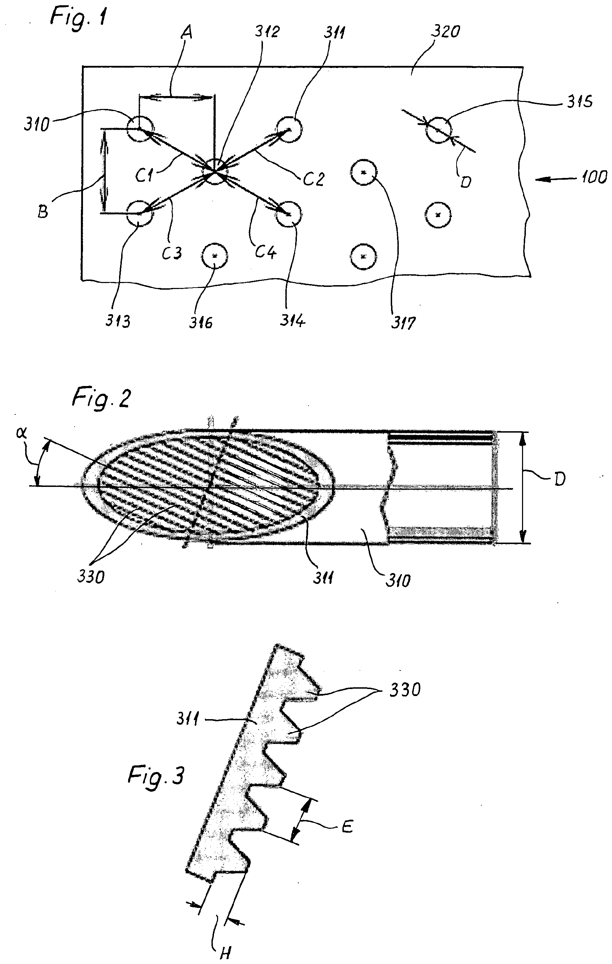

Im Ausführungsbeispiel gemäß Fig. 1 weist ein Verdampfer 100 kältemittelführende Rohre 310, 311, 312, 313 und/oder 314 auf, die einen mittleren Abstand C zueinander aufweisen. Die Rohre sind in Lamellen 320 wärmeleitend eingebunden. Der Abstand C ist im Verhältnis zum Außendurchmesser D der Rohre 310, 311, 312, 313 und/oder 314 größer als 3,5.

Der mittlere Abstand C wird wie folgt berechnet:

$$C = 1/4 \ (C1+C2+C3+C4)$$

C1 ist der Abstand zwischen Rohr 312 und 310.

C2 ist der Abstand zwischen Rohr 312 und 311.

C3 ist der Abstand zwischen Rohr 312 und 313.

C4 ist der Abstand zwischen Rohr 312 und 314.

In einem Ausführungsbeispiel gemäß Fig. 2 sind die inneren Rippen 330 im Rohr 310, 311, 312, 313 und/oder 314 parallel nebeneinander in einem Winkel "α" von 10° bis 40°, insbesondere 16, 18 oder 25° angeordnet. Das Rohr 310 ist in Fig. 2 schräg durchgeschnitten dargestellt, ähnlich wie eine Wurst; dadurch entsteht ein elliptischer Schnitt. Hierbei ist die Rohrwand 311 zu sehen. Das Rohr 310 gemäß dem Ausführungsbeispiel ist rund.

In einem weiteren Ausführungsbeispiel gemäß Fig. 3 haben die inneren Rippen 330 eine Höhe H von ca. 0,15 oder 0,2 mm und einen Abstand E von ca. 0,4 mm, 0,45 mm oder 0,5 mm. Die Figur zeigt einen geschnittenen Abschnitt der Rohrwand 311.

In einem vorteilhaften Verdampfer 100 der Wärmepumpenvorrichtung beträgt der horizontale Abstand A der Rohre 310 und 312 ca. 25 - 33 mm, insbesondere 30 mm, der vertikale Abstand B der Rohre 310 und 313 ca. 30 - 38 mm, insbesondere 34 mm und der Außendurchmesser D der Rohre 310, 311, 312, 313 und 314 ca. 7 - 12 mm, insbesondere 9,5 mm.

Der horizontale Abstand A ergibt sich aus dem von oben projizierten Abstand der Rohre 310 und 312 oder 311 und 312. Der vertikale Abstand B ergibt sich aus dem von der Seite projizierten Abstand der Rohre 310 und 313 oder 312 und 316.

Die Abstände der Rohre 310, 311, 312, 313, 314 können auch zwischen ein und demselben Rohr bestehen, wenn das jeweilige Rohr am Ende des Verdampfers 100 umgebogen ist und wieder in die Lamellen 320 des Verdampfers 100 zurückgeführt ist, vorteilhaft mäanderförmig.

**Patentansprüche**

1. Wärmepumpenvorrichtung mit einem Lamellenrohrwärmeübertrager als Verdampfer (100) einem Verdichter, einem Verflüssiger, einem Expansionsventil, und einem reversiblen Kältemittelkreislauf, **dadurch gekennzeichnet,** **dass** ein mittlerer Abstand (C) kältemittelführender Rohre (310, 311, 312, 313,314) eines Verdampfers (100) im Verhältnis zum Außendurchmesser (D) der Rohre (310, 311, 312, 313, 314) größer als 3,5 ist, wobei die Rohre (310, 311, 312, 313, 314) des Lamellenrohrwärmeübertragers (200) innen Rippen (330) aufweisen, wobei bei einer Lufttemperatur von -7°C und einer Verflüssigeraustrittstemperatur von 50°C die Heizleistung zwischen 10 und 14 kW liegt und die Kältemittelfüllmenge des Kältekreises < 6,0 kg ist.

2. Wärmepumpenvorrichtung nach Anspruch 1, **dadurch gekennzeichnet,** **dass** die Rohre (310, 311, 312, 313, 314) des Lamellenrohrwärmeübertragers aus Edelstahl oder Kupfer bestehen, die Rohre (310, 311, 312, 313, 314) mit Lamellen (320) aus Aluminium bestückt sind und die Rohre (310, 311, 312, 313, 314) zumindest teilweise zueinander versetzt angeordnet sind.

3. Wärmepumpenvorrichtung nach Anspruch 1, **dadurch gekennzeichnet,** **dass** die inneren Rippen (330) parallel nebeneinander in einem Winkel (a) von 10° - 40° im Rohr angeordnet sind.

4. Wärmepumpenvorrichtung nach Anspruch 1 oder 3, **dadurch gekennzeichnet,** **dass** die inneren Rippen (330) eine Höhe (H) von ca. 0,15 mm, 0,2 mm oder 0,25 mm und einen Abstand (A) von ca. 0,4 mm, 0,45 mm oder 0,5 mm haben.

5. Wärmepumpenvorrichtung nach einem oder mehreren der vorhergehenden Ansprüche, **dadurch gekennzeichnet,** **dass** der Lamellenrohrwärmeübertrager von außen mit Luft und von innen mit Kältemittel durchströmt wird.

6. Wärmepumpenvorrichtung nach einem oder mehreren der vorhergehenden Ansprüche, **dadurch gekennzeichnet,** **dass** das Kältemittel R407C, R410A, R134a, R290 oder R744 ist.

7. Wärmepumpenvorrichtung nach einem oder mehreren der vorhergehenden Ansprüche, **dadurch gekennzeichnet,** **dass** der horizontale Abstand der Rohre (313, 314) ca. 25 - 33 mm, insbesondere 30 mm, der vertikale Abstand der Rohre (310, 313) ca. 30 - 38 mm, insbesondere 34 mm und der Außendurchmesser der Rohre (310, 311, 312, 313, 314) ca. 7 - 12 mm, insbesondere 9,5 mm beträgt.

**Claims**

1. Heat pump equipment with a laminated-tube heat exchanger as evaporator (100), a compressor, a condenser, an expansion valve and a reversible refrigerant circuit, **characterized in that**, an average separation distance (C) of refrigerant-carrying tubes (310, 311, 312, 313, 314) of an evaporator (100) is larger than 3.5 in relation to the outer diameter (D) of the tubes (310, 311, 312, 313, 314), where the tubes (310, 311, 312, 313, 314) of the laminated-tube heat exchanger (200) indicate internal ribs (330), where, at an air temperature of -7°C and a condenser outlet temperature of 50°C, the heating capacity is between 10 and 14 kW and the refrigerant filling capacity of the refrigeration cycle is <6.0 kg.

2. Heat pump equipment according to Claim 1, **characterized in that**, the tubes (310, 311, 312, 313, 314) of the laminated-tube heat exchanger consist of stainless steel or copper, the tubes (310, 311, 312, 313, 314) are equipped with louvers of aluminum (320) and that the tubes (310, 311, 312, 313, 314) are arranged offset, at a minimum in part offset, to each other.

3. Heat pump equipment according to Claim 1,
   **characterized in that**,
   the inner ribs (330) are arranged in the tube near each other in parallel at an angle (a) of 10° - 40°.

4. Heat pump equipment according to Claim 1 or 3,
   **characterized in that**,
   the inner ribs (330) have a height (H) of approx. 0.15 mm, 0.2 mm or 0.25 mm and a separation distance (A) of approx. 0.4 mm, 0.45 mm or 0.5 mm.

5. Heat pump equipment according to one or more of the preceding claims,
   **characterized in that**,
   the laminated-tube heat exchanger is flowed through externally with air and internally with refrigerant.

6. Heat pump equipment according to one or more of the preceding claims,
   **characterized in that**,
   the refrigerant is R407C, R410A, R134a, R290 or R744.

7. Heat pump equipment according to one or more of the preceding claims,
   **characterized in that**,
   the horizontal separation distance of the tubes (313, 314) is approx. 25 - 33 mm, in particular 30 mm, the vertical separation distance of the tubes (310, 313) is approx. 30 - 38 mm, in particular 34 mm, and the outer diameter of the tubes (310, 311, 312, 313, 314) is approx. 7 - 12 mm, in particular 9.5 mm.

**Revendications**

1. Dispositif de pompe à chaleur doté d'un échangeur de chaleur comme évaporateur (100),
   d'un compresseur, d'un condenseur, d'une soupape de détente et d'un circuit de refroidissement réversible,
   **caractérisée en ce que**
   un écart moyen (C) des tubes transportant le frigorigène (310, 311, 312, 313, 314) d'un compresseur (100) est supérieur à 3,5 par rapport au diamètre extérieur (D) des tubes (310, 311, 312, 313, 314),
   les tubes (310, 311, 312, 313, 314) de l'échangeur de chaleur à tubes à ailettes (200) présentant des nervures (330) à l'intérieur,
   La puissance de chauffe s'élevant, sous une température de l'air de -7°C et une température de sortie du condenseur de 50 °C, de 10 à 14 kW et la quantité de frigorigène du circuit de refroidissement étant inférieure à 6,0 kg.

2. Dispositif de pompe à chaleur selon la revendication 1,
   **caractérisée en ce que**
   les tubes (310, 311, 312, 313, 314) de l'échangeur de chaleur à tubes à ailettes sont en inox ou en cuivre, **en ce que** les tubes (310, 311, 312, 313, 314) sont équipés d'ailettes (320) en aluminium et **en ce que** les tubes (310, 311, 312, 313, 314) sont disposés au moins en partie en décalage les uns par rapport aux autres.

3. Dispositif de pompe à chaleur selon la revendication 1,
   **caractérisée en ce que**
   les nervures intérieures (330) sont disposées dans le tube parallèlement les unes aux autres à un angle (α) de 10° à 40°.

4. Dispositif de pompe à chaleur selon la revendication 1 ou 3,
   **caractérisée en ce que**
   les nervures intérieures (330) ont une hauteur (H) d'environ 0,15 mm, 0,2 mm ou 0,25 mm et un écart (A) d'environ 0,4 mm, 0,45 mm ou 0,5 mm.

5. Dispositif de pompe à chaleur selon l'une ou plusieurs des revendications précédentes,
   **caractérisée en ce que**
   l'échangeur de chaleur à tubes à ailettes est parcouru de l'extérieur par de l'air et de l'intérieur par un frigorigène.

6. Dispositif de pompe à chaleur selon l'une ou plusieurs des revendications précédentes,
   **caractérisée en ce que**
   le frigorigène est R407C, R410A, R134a, R290 ou R744.

7. Dispositif de pompe à chaleur selon l'une ou plusieurs des revendications précédentes,
   **caractérisée en ce que**
   l'écart horizontal entre les tubes (313, 314) s'élève à environ 25 à 33 mm, en particulier à 30 mm, **en ce que** l'écart vertical entre les tubes (310, 313) s'élève à environ 30 à 38 mm, en particulier à 34 mm et **en ce que** le diamètre extérieur des tubes (310, 311, 312, 313, 314) s'élève à environ 7 à 12 mm, en particulier à 9,5 mm.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03073023 A1